# EUROPEAN PATENT APPLICATION

(11) **EP 4 700 937 A2**
(43) Date of publication of application: **25.02.2026**
(21) Application number: 25195593.6
(22) Date of filing: 13.08.2025
(51) Int. Cl.: H01M 50/211, H01M 50/236, H01M 50/242, H01M 50/289, H01M 50/548

(54) **BATTERY MODULE AND BATTERY PACK**

(30) Priority: 23.08.2024 CN 202422065690 U
(71) Applicant: AESC Japan Ltd., Yokohama-Shi, Kanagawa 220-0012 (JP)
(72) Inventor: YANG, Yunting, Pudong New Area Shanghai, 201315 (CN); BAI, Yulong, Pudong New Area Shanghai, 201315 (CN)
(74) Representative: Becker, Eberhard

(57) **Abstract**

The present disclosure relates to the field of power battery technology, and particularly relates to a battery module and a battery pack. The battery module includes a housing (1); multiple battery cells (2), the multiple battery cells (2) stacked and arranged in the housing (1), the battery cells (2) having airbags (22) and tabs (21), at least a part of the tabs (21) extending out of the airbags (21); a first adhesive block (6), located in the housing (1) and distributed at the tab side of the battery cells (2), and the first adhesive block (6) wrapping at least a part of the airbags (11); a second adhesive block (3), the second adhesive block (3) located at one side of the first adhesive block (6) facing away from the tab side of the battery cells (2), and connected with the housing (1).

## Description

### BACKGROUND

### Technical Field

The present disclosure relates to the field of power battery technology, and particularly relates to a battery module and a battery pack.

### Description of Related Art

In order to reduce costs, a generally employed method for existing battery packs is to inject a type of adhesive at both ends of the battery module. Therefore, the adhesive at both ends of the battery module needs to have a specific strength to prevent deformation. When the pouch battery cells inside the battery module are operated, the airbag of the battery cells expands, and although the adhesive at both ends of the battery module can meet the strength requirements, there is a problem of difficulty in absorbing the expansion amount of the airbag of the battery cells. Accordingly, the injected adhesive in the battery module needs to simultaneously satisfy the requirements of absorbing the expansion amount of the airbag of the battery cells as well as structural strength, which has become an urgent technical problem to be solved.

### SUMMARY

Given the aforementioned disadvantages of the related art, the purpose of the present disclosure lies in providing a battery module and a battery pack that solve the problem in the related art where the injected adhesive in the battery module can hardly simultaneously satisfy the requirements of absorbing the expansion amount of the airbag of the battery cells as well as structural strength, thereby improving quality of products.

To achieve the above purpose and other related purposes, the present disclosure provides a battery module, including: a housing; multiple battery cells, the multiple battery cells stacked and arranged in the housing, the battery cells having airbags and tabs, at least a part of the tabs extending out of the airbags; a first adhesive block, located in the housing and distributed at the tab side of the battery cells, and the first adhesive block wrapping at least a part of the airbags; a second adhesive block, the second adhesive block located at one side of the first adhesive block facing away from the tab side of the battery cells, and connected with the housing.

Optionally, the housing has an opening. The opening corresponds to the tab side of the battery cells. The second adhesive block fills the opening to seal the opening, and the outer sidewall of the second adhesive block forms a part of the outer sidewall of the battery module.

Optionally, the hardness of the first adhesive block is less than the hardness of the second adhesive block.

Optionally, the Shore C hardness of the first adhesive block is C1, 30<C1<50; the Shore C hardness of the second adhesive block is C2, C2≥50.

Optionally, the battery module further includes a separating device. The separating device is located between the first adhesive block and the second adhesive block and separates the first adhesive block from the second adhesive block.

Optionally, the separating device includes a sampling assembly and two partitions. The sampling assembly is clamped between the two partitions.

Optionally, the separating device is disposed on the housing.

Optionally, the housing includes a side panel. The separating device is disposed on the side panel, and is elastically connected with the side panel.

Optionally, the side panel is provided with an elastic clip. The elastic clip has a clamping gap that can be elastically adjusted along the thickness direction of the second adhesive block. The elastic clip clamps a part of the separating device that extends into the clamping gap.

Optionally, the elastic clip includes two elastically clamping parts arranged opposite to each other. The clamping gap is defined between the two elastically clamping parts.

Optionally, the first adhesive block includes a first foam adhesive; the second adhesive block includes a second foam adhesive.

Optionally, the first adhesive block wraps at least a part of the tabs; or, the first adhesive block and the second adhesive block wrap at least a part of the tabs.

Optionally, the battery module further includes a sampling assembly. The first adhesive block wraps at least a part of the sampling assembly; or, the second adhesive block wraps at least a part of the sampling assembly.

To achieve the above purpose and other related purposes, the present disclosure further provides a battery pack including the battery module as described above.

As described above, the battery module and battery pack of the present disclosure have at least the following advantageous effects. The first adhesive block and the second adhesive block are separated from each other. The first adhesive block and the second adhesive block may be selected with appropriate hardness according to requirements, thereby absorbing and compensating for the expansion amount of the airbag through the first adhesive block, and ensuring the strength at the ends of the battery module through the second adhesive block. In this way, it is possible to improve the product quality of the battery module and battery pack.

### BRIEF DESCRIPTION OF THE DRAWINGS

FIG. 1 is a structural view of an embodiment of the battery module of the present disclosure.
FIG. 2 is a schematic view of a partial structure of the battery module in FIG. 1.
FIG. 3 is an exploded view of the battery module in FIG. 1.
FIG. 4 is a side view of the battery module in FIG. 1.
FIG. 5 is a partial sectional view taken along line A-A in FIG. 4.
FIG. 6 is a sectional view taken along line B-B in FIG. 4.
FIG. 7 is an enlarged view of a part D in FIG. 6.
FIG. 8 is an exploded view of the separating device in FIG. 2.
FIG. 9 is a partial exploded view of the elastic clip and the side panel in FIG. 2.

### DESCRIPTION OF THE EMBODIMENTS

The implementation of the present disclosure is explained below through specific embodiments. Those skilled in this technology can easily understand other advantages and effects of the present disclosure from the content disclosed in this specification.

It should be noted that the structure, proportion, size, and so on shown in the drawings attached to this specification are only used to match the content disclosed in the specification for understanding and reading by those skilled in this technology, and are not intended to limit the restrictive conditions under which present disclosure may be implemented. Therefore, they do not have substantive technical significance. Any modification of structure, change in proportion relationship, or adjustment in size, as long as it does not affect the effectiveness that present disclosure can produce and the purpose it can achieve, should still fall within the scope that can be covered by the technical content disclosed in present disclosure. At the same time, terms such as "upper", "lower", "left", "right", "middle", and "one" used in this specification are also only for clarity of description, and not intended to limit the scope in which present disclosure may be implemented. Changes or adjustments in their relative relationships, without substantial changes to the technical content, should also be considered within the scope in which present disclosure may be implemented.

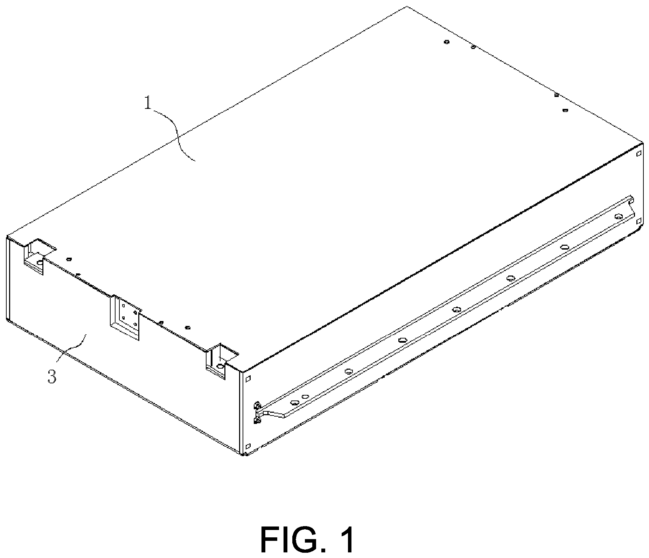

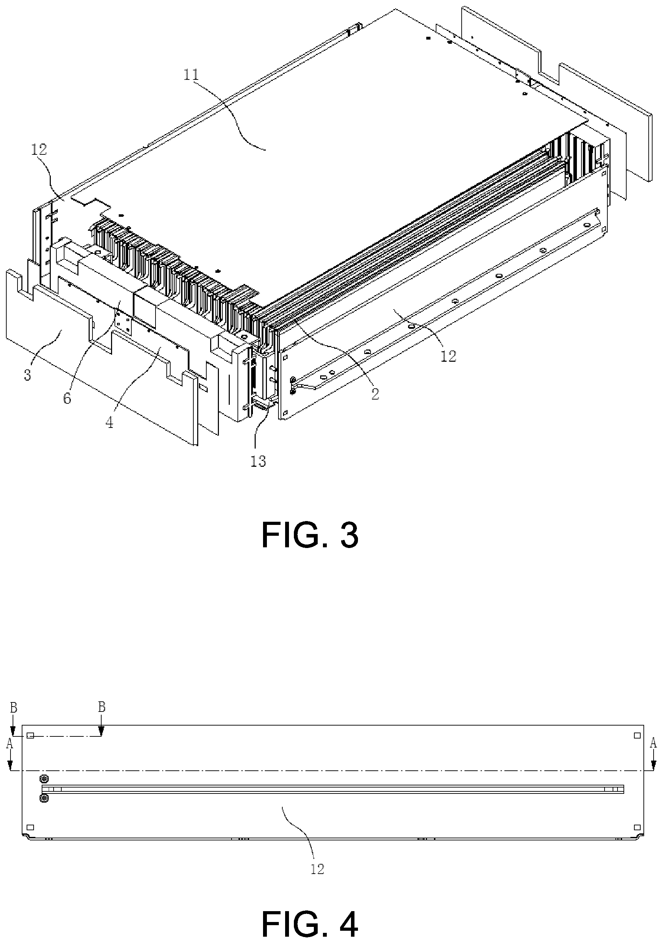

Referring to FIG. 1 to FIG. 3, in some optional embodiments, the present disclosure provides a battery pack, which includes a battery module.

Referring to FIG. 1 to FIG. 3, in some optional embodiments, the battery module provided by the present disclosure includes a housing 1, multiple battery cells 2, a first adhesive block 6 and a second adhesive block 3. In addition to the above components, the battery module may further include a separating device 4. Multiple battery cells 2 are stacked and arranged in the housing 1. The battery cell 2 has an airbag 22 and a tab 21. At least a part of the tab 21 extends out of the airbag 22. The battery cell 2 further includes a cell main body. A part of the tab 21 is located inside the airbag 22 and electrically connected to the cell main body, and another part of the tab 21 extends out of the airbag 22 to realize the external output of the electrical energy of the battery cell. The first adhesive block 6 is located inside the housing 1 and distributed at the tab side of the battery cell 2, and the first adhesive block 6 wraps at least a part of the airbag 22. At least a part of the airbag 22 wrapped by the first adhesive block 6 may absorb and compensate for the expansion amount of the airbag 22. The tab side of the battery cell 2 is a side of the battery cell 2 that has the tab 21. The second adhesive block 3 is located on a side of the first adhesive block 6 facing away from the tab side of the battery cell 2. In other words, the second adhesive block 3 is positioned relatively external to the first adhesive block 6. The second adhesive block 3 is connected to the housing 1. The second adhesive block 3 is separated from the first adhesive block 6, so that the second adhesive block 3 may be selected with appropriate hardness to have a specific anti-deformation ability, which improves the overall structural strength and protects the battery cell 2.

Optionally, the first adhesive block 6 wraps a part of the airbag 22 near the tab 21. During the use of the battery cell 2, since a part of the airbag 22 near the tab 21 tends to expand, the first adhesive block 6 wrapping the part of the airbag 22 near the tab 21 helps to fully compensating for the expansion of the airbag 22, thus improving the stability of the overall structure.

Optionally, the housing 1 has an opening. The opening corresponds to the tab side of the battery cell 2. The second adhesive block 3 fills and seals the opening, and the outer sidewall of the second adhesive block 3 forms a part of the outer sidewall of the battery module. That is, the outer side of the second adhesive block 3 does not have other structures shielding the second adhesive block 3, so that the second adhesive block 3 can serve the function and achieve the effect of an end panel of a conventional battery module. The housing 1 includes an upper cover 11, a bottom panel 13 and two side panels 12. The two side panels 12 are arranged opposite to each other. The bottom panel 13 and the side panels 12 are connected to and cooperate with the upper cover 11 to construct a housing 1 with openings at both ends. Specifically, the bottom panel 13 is located between the two side panels 12. The two ends of the bottom panel 13 are connected to the two side panels 12 respectively to form a U-shaped structure with the opening facing the upper cover 11. This structure is designed to seal the opening through the second adhesive block 3. The second adhesive block 3 replaces the end panel that seals the opening, so there is no need to provide an additional end panel, which helps simplify the structure and reduce weight. The first adhesive block 6 and the second adhesive block 3 are provided separately, so that the second adhesive block 3 may be selected with appropriate hardness according to requirements to prevent deformation, thereby enhancing the strength at both ends of the battery module, which in turn helps ensure the strength of the overall structure. The first adhesive block 6 may be selected with appropriate hardness according to requirements to have a specific elastic deformation ability to provide deformation space for the expansion and deformation of the airbag 22.

Optionally, the first adhesive block 6 includes a first foam adhesive, which may be filled at the tab side of the battery cell 2 and solidified. The filling is simple, convenient, and quick, with good heat insulation, electrical insulation, and flame retardant effects.

Optionally, the second adhesive block 3 includes a second foam adhesive, which may be filled at the opening of the housing 1 and solidified. The filling is simple, convenient, and quick, with good heat insulation, electrical insulation, and flame retardant effects.

During specific configuration, a first fixture may be inserted into the opening to a specific depth. Then the second foam adhesive is injected into the housing 1 through an injection hole on the housing 1. After the second foam adhesive is completely foamed and formed into a stable adhesive block structure, the first fixture is removed. Afterwards, a second fixture is used to seal the opening, then the second foam adhesive is injected between the second adhesive block 3 and the second fixture. When the second foam adhesive is completely foamed and formed into a stable adhesive block structure that seals the opening, the second fixture is removed, thus completing the configuration of the second adhesive block 3.

Optionally, the hardness of the first adhesive block 6 is less than the hardness of the second adhesive block 3. Furthermore, the Shore C hardness of the first adhesive block 6 is C1, 30<C1<50; the Shore C hardness of the second adhesive block 3 is C2, C2≥50.Specifically, C1 may be any one of the values such as 31, 35, 40, 43, 49, and so on; C2 may be any one of the values such as 50, 51, 56, 60, 70, and so on.

In the battery module of the above embodiment, the first adhesive block 6 and the second adhesive block 3 are disposed separately, and appropriate hardness may be selected according to requirements. The first adhesive block 6 serves to protect the tab side of the battery cell 2 and absorb the expansion of the airbag 22, while the second adhesive block 3 serves to enhance the strength of the overall structure. Specifically, the first adhesive block 6 may be selected with a relatively low hardness, having a specific elastic deformation capability. The first adhesive block 6 is located at the tab side of the battery cell 2 and may wrap at least a part of the airbag 22. The first adhesive block 6 covers the airbag 22, which may provide elastic deformation space for the expansion of the airbag 22, absorbing the expansion amount of the airbag 22. The second adhesive block 3 may be selected with a relatively high hardness, having a specific resistance to deformation, connected with the housing 1, improving the overall structural strength of the battery module.

Optionally, the first adhesive block 6 wraps at least a part of the tab 21; or, the first adhesive block 6 and the second adhesive block 3 wraps at least a part of the tab 21. The first adhesive block 6 or the first adhesive block 6 and the second adhesive block 3 wrapping the tab 21 may serve to protect the tab side of the battery cell 2, on one hand preventing deformation from collision at the tab side of the battery cell 2, and on the other hand reducing the risk of thermal propagation during thermal runaway.

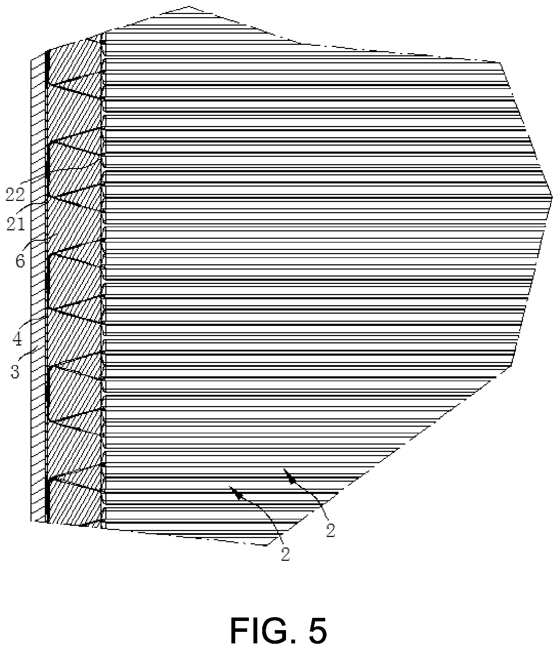

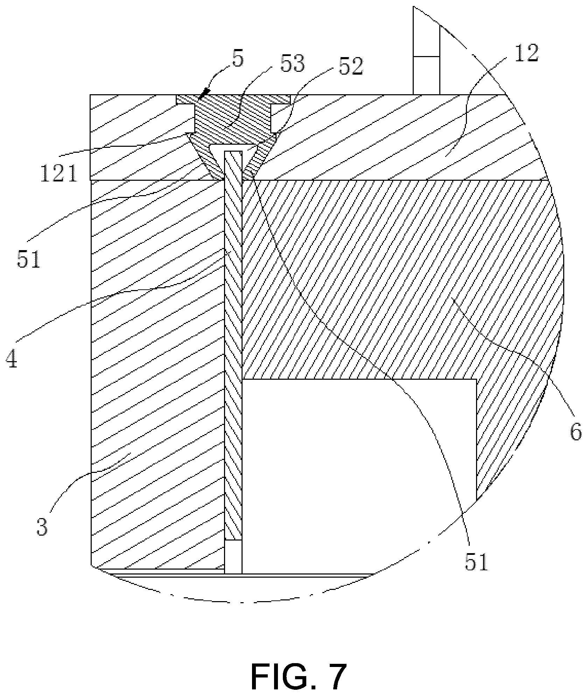

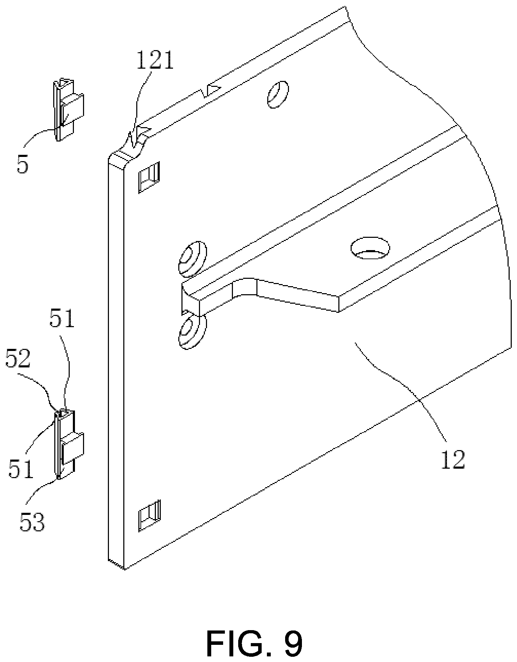

Referring to FIG. 1 to FIG. 7 and FIG. 9, in some optional embodiments, the battery module further includes a sampling assembly 42. The first adhesive block 6 wraps at least a part of the sampling assembly 42; or, the second adhesive block 3 wraps at least a part of the sampling assembly 42.

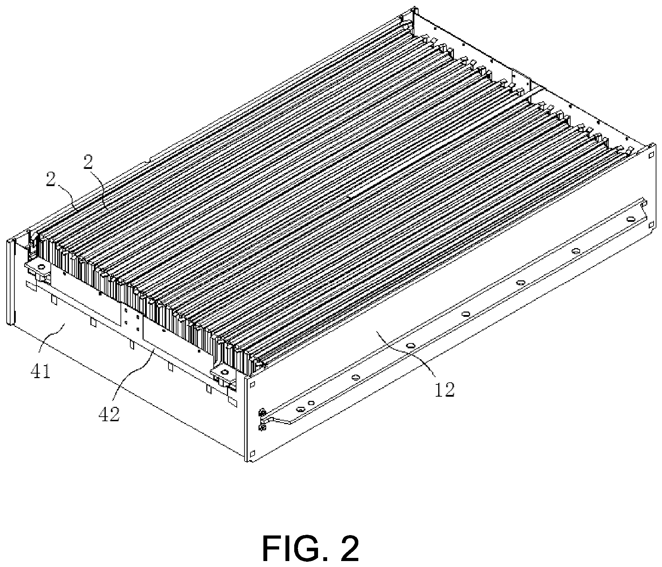

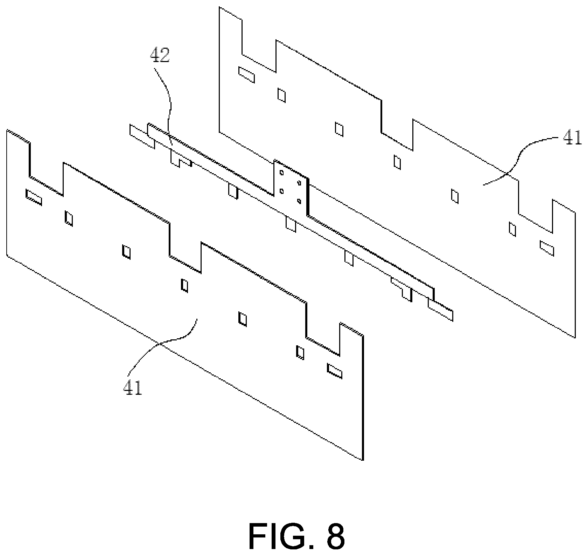

Referring to FIG. 2, FIG. 3, FIG. 7 and FIG. 8, in some optional embodiments, the separating device 4 is located between the first adhesive block 6 and the second adhesive block 3 and separates the first adhesive block 6 from the second adhesive block 3 to facilitate the separate setting of the first adhesive block 6 and the second adhesive block 3. During specific configuration, a fixture may be used to seal the opening, then the first foam adhesive and the second foam adhesive are respectively injected into both sides of the separating device 4 inside the housing 1 through the adhesive injection holes on the housing 1. After the first foam adhesive and the second foam adhesive are both completely foamed and formed into stable adhesive block structures, the fixture is removed, thereby completing the configuration of the first adhesive block 6 and the second adhesive block 3.

Furthermore, the separating device 4 includes a sampling assembly 42 and two partitions 41. The sampling assembly 42 is clamped between the two partitions 41, replacing the conventional bracket, and ensuring the stable configuration of the sampling assembly 42.

Optionally, the sampling assembly 42 includes a flexible circuit board and sampling nickel sheet. The flexible circuit board is electrically connected with the tab 21 of the battery cell 2 through the sampling nickel sheet. The partition 41 has openings corresponding to the sampling nickel sheet to allow the sampling nickel sheet to electrically connect with the tab 21 of the battery cell 2.

Optionally, the two partitions 41 in the same separating device 4 may be stacked and adhesively fixed. The two partitions 41 in the same separating device 4 wrap at least a part of the flexible circuit board. Both ends of the partition 41 are elastically engaged in the elastic clip 5 on the corresponding side panel 12.

In the battery module of the above embodiments, the sampling assembly 42 is clamped between two partitions 41 to achieve the fixing of the sampling assembly 42, so that the partition 41 can not only separate the first adhesive block 6 from the second adhesive block 3, but also position and fix the sampling assembly 42 with a simple structure that is easy to assemble.

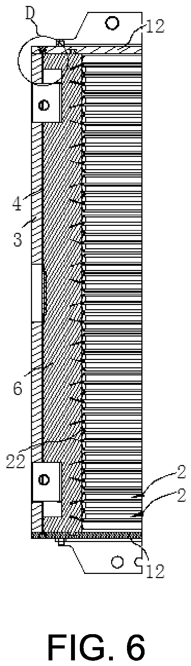

Optionally, the partition 41 is disposed on the housing 1. Further referring to FIG. 6, FIG. 7 and FIG. 9, the partition 41 is disposed on the side panel 12, and is elastically connected with the side panel 12. The side panel 12 is provided with an elastic clip 5. The elastic clip 5 has a clamping gap 52 that may be elastically adjusted along the thickness direction of the second adhesive block 3. The elastic clip 5 clamps a part of the partition 41 that extends into the clamping gap 52. Specifically, the elastic clip 5 includes two elastically clamping parts 51 arranged opposite to each other, with the clamping gap 52 defined between the two elastically clamping parts 51.

Optionally, the side panel 12 is provided with a configuration groove 121. The elastic clip 5 is disposed in the configuration groove 121. The elastic clip 5 further includes a base 53. The base 53 cooperates with the configuration groove 121 to achieve the positioning and configuration of the elastic clip 5. The elastically clamping parts 51 are disposed on the base 53, and may be elastically deformed to be close to each other to reduce the clamping gap 52, as well as elastically deformed to move away from each other to increase the clamping gap 52.

In the battery module of the above embodiments, the separating device 4 separates the first adhesive block 6 from the second adhesive block 3. The first adhesive block 6 and the second adhesive block 3 do not interfere with each other, and the first adhesive block 6 and the second adhesive block 3 may be filled simultaneously, making production and manufacturing simple, convenient, and low-cost. For example, the first adhesive block 6 is filled and disposed in the first area, the second adhesive block 3 is filled and disposed in the second area, the upper cover 11 has a first filling hole corresponding to the first area and a second filling hole corresponding to the second area, and adhesives with different hardness fill the first area and the second area respectively through the corresponding filling holes. In addition, the separating device 4 is elastically engaged with the housing 1, so that the separating device 4 is able to float and regulate within a specific range during the assembly process, thereby allowing the sampling nickel sheet to move within a specific range. Such design helps to prevent the sampling nickel sheet from being pulled during movement in the assembly process of the separating device 4, which improves quality of products.

Through the cooperation of the first adhesive block 6 and the second adhesive block 3 separated from each other, the battery module and battery pack of the present disclosure may both absorb the expansion of the airbag 22 of the battery cell 2, while ensuring the strength and reliability of the overall structure of the battery module and battery pack, which improves the quality of products of the battery module and battery pack and reduces costs.

In the description of this specification, reference to terms such as "this embodiment", "example", "specific example", etc., means that the specific features, structures, materials, or characteristics described in combination with that embodiment or example are included in at least one embodiment or example of present disclosure. In this specification, the illustrative expressions of the above terms do not necessarily refer to the same embodiment or example. Moreover, the described specific features, structures, materials, or characteristics may be combined in any appropriate manner in one or more embodiments or examples.

## Claims

1. A battery module, comprising:
a housing (1);
a plurality of battery cells (2), the plurality of battery cells (2) stacked and arranged in the housing (1), the plurality of battery cells (2) having airbags (22) and tabs (21), at least a part of the tabs (21) extending out of the airbags (22);
a first adhesive block (6), located in the housing (1) and distributed at a tab side of the plurality of battery cells (2), and the first adhesive block (6) wrapping at least a part of the airbags (22);
a second adhesive block (3), the second adhesive block (3) located at one side of the first adhesive block (6) facing away from the tab side of the plurality of battery cells (2), and connected with the housing (1).

2. The battery module according to claim 1, wherein the housing (1) has an opening, the opening corresponds to the tab side of the plurality of battery cells (2), the second adhesive block (3) fills the opening to seal the opening, and an outer sidewall of the second adhesive block (3) forms a part of an outer sidewall of the battery module.

3. The battery module according to claim 1, wherein a hardness of the first adhesive block (6) is less than a hardness of the second adhesive block (3).

4. The battery module according to claim 3, wherein a Shore C hardness of the first adhesive block (6) is C1, 30<C1<50; a Shore C hardness of the second adhesive block (3) is C2, C2≥50.

5. The battery module according to claim 1, wherein the battery module further comprises a separating device (4), the separating device (4) is located between the first adhesive block (6) and the second adhesive block (3) and separates the first adhesive block (6) from the second adhesive block (3).

6. The battery module according to claim 5, wherein the separating device (4) comprises a sampling assembly (42) and two partitions (41), the sampling assembly (42) is clamped between the two partitions (41).

7. The battery module according to claim 5 or 6, wherein the separating device (4) is disposed on the housing (1).

8. The battery module according to claim 7, wherein the housing (1) comprises a side panel (12), the separating device (4) is disposed on the side panel (12), and is elastically connected with the side panel (12).

9. The battery module according to claim 8, wherein the side panel (12) is provided with an elastic clip (5), the elastic clip (5) has a clamping gap (52) that is able to be elastically adjusted along a thickness direction of the second adhesive block (3), the elastic clip (5) clamps a part of the separating device (4) that extends into the clamping gap (52).

10. The battery module according to claim 9, wherein the elastic clip (5) comprises two elastically clamping parts (51) arranged opposite to each other, the clamping gap (52) is defined between the two elastically clamping parts (51).

11. The battery module according to claim 1, wherein the first adhesive block (6) comprises a first foam adhesive; the second adhesive block (3) comprises a second foam adhesive.

12. The battery module according to claim 1, wherein the first adhesive block (6) wraps at least a part of the tabs (21); or, the first adhesive block (6) and the second adhesive block (3) wrap at least a part of the tabs (21).

13. The battery module according to claim 1, wherein the battery module further comprises a sampling assembly (42), the first adhesive block (6) wraps at least a part of the sampling assembly (42); or, the second adhesive block (3) wraps at least a part of the sampling assembly (42).

14. A battery pack, comprising the battery module according to any one of claims 1-13.
